(19)

Europäisches
Patentamt
European
Patent Office
Office européen
des brevets

(11) **EP 3 399 303 B1**

(12) **EUROPEAN PATENT SPECIFICATION**

(45) Date of publication and mention
of the grant of the patent:
**28.04.2021 Bulletin 2021/17**

(51) Int Cl.:
***G01N 23/203*** *(2006.01)*   ***G01T 7/00*** *(2006.01)*
***G01V 5/00*** *(2006.01)*

(21) Application number: **16880624.8**

(86) International application number:
**PCT/CN2016/096654**

(22) Date of filing: **25.08.2016**

(87) International publication number:
**WO 2017/113831 (06.07.2017 Gazette 2017/27)**

(54) **HANDHELD BACKSCATTER IMAGER AND IMAGING METHOD THEREOF**

TRAGBARER RÜCKSTREUUNGSBILDGEBER UND BILDGEBUNGSVERFAHREN DAFÜR

IMAGEUR À RÉTRODIFFUSION PORTATIF ET SON PROCÉDÉ D'IMAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2015 CN 201511009171**

(43) Date of publication of application:
**07.11.2018 Bulletin 2018/45**

(73) Proprietors:
• **Tsinghua University
Haidian District
Beijing 100084 (CN)**
• **Nuctech Company Limited
TongFang Building,
Shuangqinglu,
Haidian District
Beijing 100084 (CN)**

(72) Inventors:
• **CHEN, Zhiqiang
Beijing 100084 (CN)**

• **LI, Yuanjing
Beijing 100084 (CN)**
• **ZHAO, Ziran
Beijing 100084 (CN)**
• **WU, Wanlong
Beijing 100084 (CN)**
• **TANG, Le
Beijing 100084 (CN)**
• **JIN, Yingkang
Beijing 100084 (CN)**
• **WANG, Pu
Beijing 100084 (CN)**

(74) Representative: **Cabinet Beau de Loménie
158, rue de l'Université
75340 Paris Cedex 07 (FR)**

(56) References cited:
**CN-A- 103 063 691   CN-A- 103 901 064
CN-A- 103 901 064   CN-A- 105 445 303
CN-U- 202 177 591   CN-U- 205 484 137
US-A1- 2013 195 248   US-A1- 2014 233 707
US-A1- 2015 346 120   US-B2- 9 204 848**

EP 3 399 303 B1

**Description**

**TECHNICAL FIELD**

The present disclosure relates to the field of X-ray imaging application, and particularly, to a handheld backscatter imager for inspection of an object and an imaging method of the handheld backscatter imager, here, the object may be luggage, vehicles, walls of buildings, and various objects that need to be identified in aspect of safety of internal structures thereof and goods therein.

**BACKGROUND**

In applications of backscatter inspection imaging, due to characteristics of backscatter signals, the most commonly used scanning method is a flying-spot scanning, that is: after being collimated and modulated, rays become pencil ray beams (flying-spots), and the latter fast scan an object to be inspected point by point in a first dimensional direction; a plane of the pencil ray beams, together with detector, translates relative to the object to be inspected in a second dimensional direction; a motion speed in the second dimensional direction is greatly lower than a motion speed in the first dimensional direction, and the second dimensional direction is substantially perpendicular to the first dimensional direction; at the same time, a detector receives rays that are scattered back by the object, as a signal of a scanning point at that time, and in the data processing, a two dimensional backscatter image that reflects information of the object can be obtained by point correspondence of the scanning position and the signal point.

In application of the backscatter technique, a flying-spot scanning mode is typical and has been widely used, however, it has a natural disadvantage of low scanning efficiency. The reason is in that, the flying-spot scanning belongs to a point scanning (that scans one point at one time), which is lowest in efficiency and in scanning speed, and takes the longest time, compared to a line scanning (that scans one line at one time) and a surface scanning (that scans one surface at one time).

In addition, the characteristics of the back scattering cause low dosage of the rays, great fluctuation in signals received by the detector, which will result in great noise and poor quality of a final image. In order to enhance the signal from the detector, a usual method is to increase parameters in voltage and current of the X-ray machine or to reduce the scanning speed that was not really fast (that is, to further prolong the scanning time).

In some applications, it is difficult to increase parameters in voltage and current of the X-ray machine, and in this case, in order to ensure certain image quality, it has to prolong the scanning time; or else, in order to ensure a shorter scanning time, it has to sacrifice certain image quality. The image quality and the scanning time are like two ends of a seesaw, and designers have to balance them or make a choice between them.

For example, in a handheld backscatter imager, the X-ray machine has very small power due to its limited space and weight, which means that a voltage and a current of the X-ray machine are set to have smaller parameter values. At this moment, the image quality and the scanning time are in a dilemma. If image quality is to be assured, a very low scanning speed will certainly test the operator in stability and durability of the low speed motions, which seriously affects the operation experience; and if scanning time is to be assured, a low image quality will affect accuracy of the determination of the image by the operator. Usually, the handheld backscatter imager cannot require an operator to operate it in a long scanning time, so a low image quality is the result in most cases.

Document US 2015/346120 A1 discloses a scanning illuminating device including an emission centre from which radiation is emitted in an illuminating sector. Document US 2013/195248 A1 discloses an apparatus for imaging items behind a concealing barrier. Document CN 103 901 064 A discloses a ray emission device.

**SUMMARY**

In view of the above defects and problems existing in the prior art, at least one object of the present disclosure is to provide a handheld backscatter imager and an imaging method of the handheld backscatter imager, which solve a contradiction between the image quality and the scanning time by a special "flying-line" scanning mode.

According to one aspect of the present disclosure, and as defined in independent apparatus claim 1, there is provided a handheld backscatter imager, comprising:

an X-ray source, configured for generating an X-ray;
at least one collimator, configured for collimation of the X-ray, said collimator having a collimating slit and forming a fan beam;
a modulator, said modulator having a circular ring shape, configured to surround the X-ray source and capable of rotating around the X-ray source, the modulator being formed with at least one X-ray passing region that allows an X-ray beam to pass therethrough, the rotating axis of said modulator being perpendicular to the plane of the fan beam;

a detector, configured to receive a scattered X-ray, which is generated after the X-ray beam modulated by the modulator is scattered by an object to be inspected, and to generate a corresponding scattering signal; and

a controller, configured to acquire angular information of the modulator and the scattering signal of the detector; characterized in that the at least one X-ray passing region is designed to have a configuration of a long and narrow column of apertures, formed by a series of apertures connected to one another, to have a configuration of a long and narrow slot with a smaller diameter end, or to have a configuration of a long and narrow column of apertures, formed by a series of apertures connected to one another and including a smaller-diameter aperture, wherein a longitudinal direction of the long and narrow column of apertures or of the long and narrow slot is consistent with a linear speed direction of rotation of the modulator.

According to one aspect of the present disclosure, and as defined in independent method claim 3, there is provided a handheld backscatter imaging method, comprising:

generating, by an X-ray source, an X-ray;

collimating, by a collimator having a collimating slit and forming a fan beam, the X-ray;

passing an X-ray beam through at least one X-ray passing region of a modulator having a circular ring shape, the modulator being configured to surround the X-ray source and be capable of rotating around the X-ray source, the modulator being formed with the at least one X-ray passing region, the rotating axis of said modulator being perpendicular to the plane of the fan beam;

receiving, by a detector, a scattered X-ray, which is generated after the X-ray beam modulated by the modulator is scattered by an object to be inspected, and generating a corresponding scattering signal by the detector; and

acquiring, by a controller, angular information of the modulator and the scattering signal of the detector; characterized in that the at least one X-ray passing region is designed to have a configuration of a long and narrow column of apertures, formed by a series of apertures connected to one another, to have a configuration of a long and narrow slot with a smaller diameter end, or to have a configuration of a long and narrow column of apertures, formed by a series of apertures connected to one another and including a smaller-diameter aperture, wherein a longitudinal direction of the long and narrow column of apertures or of the long and narrow slot is consistent with a linear speed direction of rotation of the modulator.

The present disclosure at least achieves the following technical advantages:
The present disclosure provides a special "flying-line" scanning mode which is suitable for backscatter scanning imaging of an object.

Specifically, in applications of the handheld backscatter scanning, the handheld device is operated by an operator, which means that it is impossible to require the operator to operate it for a long scanning time and thus tends to reduce the scanning time. On the other hand, restrictions on weight and space usually entail that the power of the X-ray machine is small, which also means that output dosage of the X-ray machine is very low; however, in order to improve the image quality, it has to increase the scanning time.

The present disclosure solves this contradiction. By the special "flying-line" scanning mode, the output dosage of the X-ray machine is greatly increased actually, while maintaining the scanning time unchanged. Because the object to be scanned is goods instead of a human being, a great output dosage will not cause a risk on radiation safety of the object to be inspected.

Meanwhile, the output dosage in the "flying-line" scanning mode is several times more than that in the "flying-spot" scanning mode, and the increase of dosage is helpful fundamentally to reduce random fluctuation of signal and to improve signal-to-noise ratio of the signal.

Other aspects and technical advantages of the present disclosure will become apparent and more readily appreciated from the following description of the specific embodiments, taken in conjunction with the accompanying drawings.

## BRIEF DESCRIPTION OF THE DRAWINGS

In order to provide a more clear understanding of the abovementioned and other objects, features and advantages of the present disclosure, the present disclosure will be further described hereinafter in detail and completely with reference to the attached drawings.

Fig. 1 is a schematic view showing a whole structure of a handheld backscatter imager according to an embodiment of the present disclosure;
Fig. 2 is a schematic view showing structures of main internal components of the handheld backscatter imager shown in Fig. 1;

Fig. 3 is a schematic view showing a structure of a modulator of the handheld backscatter imager shown in Fig. 1;

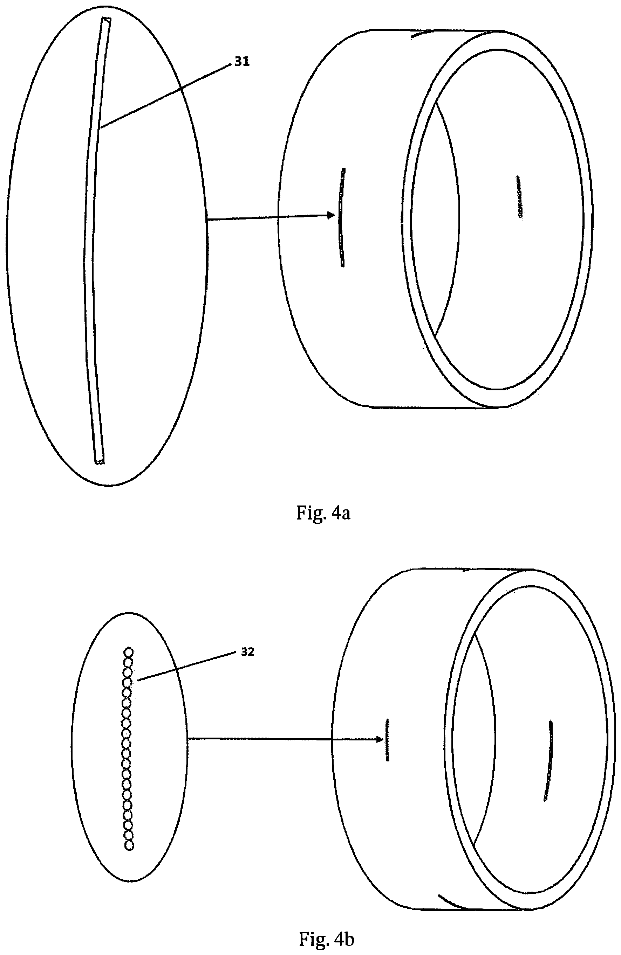

Fig. 4a is a schematic view showing an implementation of the modulator shown in Fig. 3, in a configuration of slot, that is not claimed in the present application;
Fig. 4b is a schematic view showing a structure of the modulator shown in Fig. 3, in a configuration of apertures, according to an embodiment of the invention;

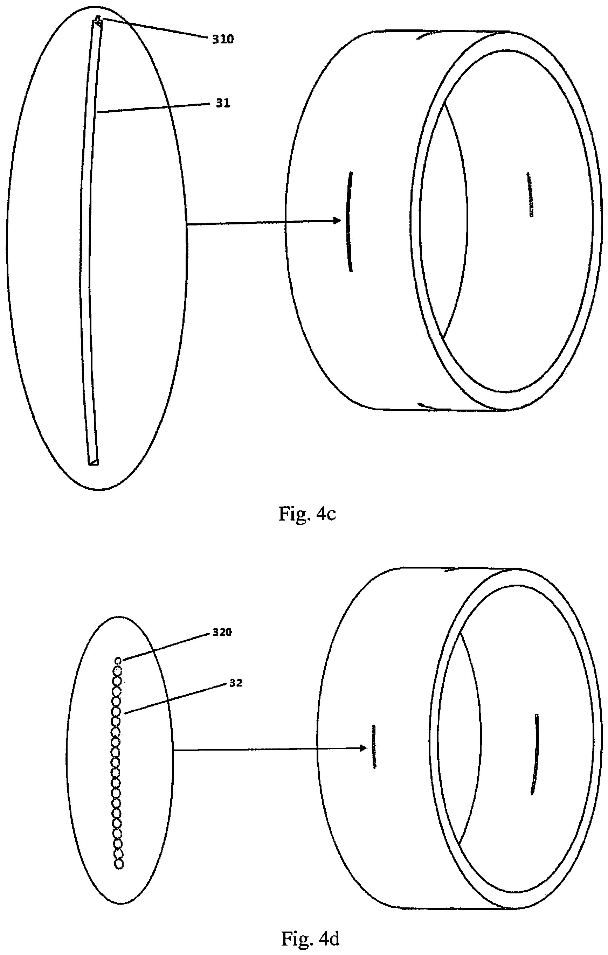

Fig. 4c is a schematic view showing a structure of the modulator shown in Fig. 3, in another configuration of slot, according to an embodiment of the invention; and
Fig. 4d is a schematic view showing a structure of the modulator shown in Fig. 3, in another configuration of apertures, according to another embodiment of the invention.

Reference Numbers in Figures

100 - handheld backscatter imager, 1 - X-ray source, 2 - collimator, 3 - modulator, 30 - passing region, 31 - long and narrow slot, 32 - long and narrow column of apertures, 310 - "short tail" slot, 320 - smaller-diameter aperture, 4 - detector, 5 - electric motor, and, 6 - controller.

## DETAILED DESCRIPTION OF THE EMBODIMENTS

Specific embodiments of the present disclosure will be described hereinafter in detail, and examples of the specific embodiments are illustrated in the attached drawings, wherein the like reference numerals refer to the like or similar elements throughout the drawings. The specific embodiments described hereinafter with reference to the attached drawings are examples and are intended to explain and illustrate the present disclosure, but not to be interpreted as a limitation to the present disclosure.

The present disclosure provides a handheld backscatter imager and an imaging method thereof.

Components and Constructions

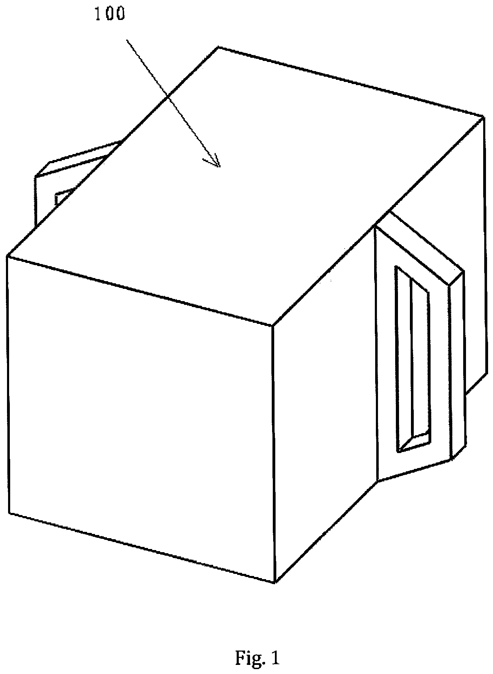

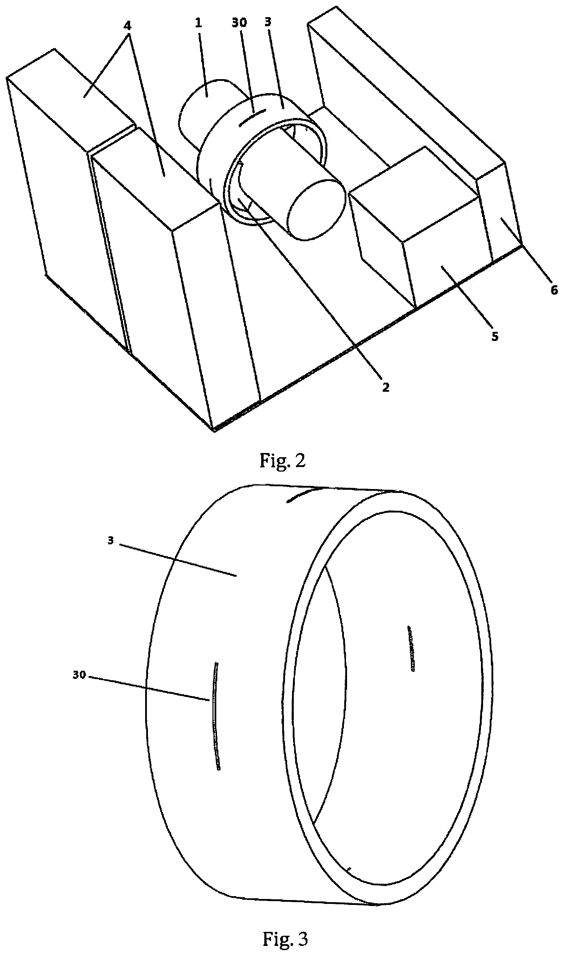

Referring to Figs. 1-3, a handheld backscatter imager 100 according to the present disclosure mainly comprises: an X-ray source 1, a collimator 2, a modulator 3, a detector 4, an electric motor 5 and a controller 6.

The X-ray source 1 is a device that generates an X-ray. The X-ray source 1 is usually an X-ray machine.

The collimator 2 is configured to constrain a ray emitted by the X-ray source 1 into a fan-beam. The collimator 2 is made of an X-ray shielding material, such as lead, tungsten, copper, steel, lead oxide, tungsten oxide, or the like, with adequate thickness, or a mixture of some of them. The collimator 2 is formed with a collimating slit having a certain width, so that the X-ray can pass through the collimating slit freely, forming a fan-beam.

The modulator 3 is a device that forms a spatially modulated beam. The modulator 3 generally assumes a circular ring shape, and an X-ray passing region 30 (which is a blank region allowing the X-ray to pass therethrough freely and having a certain geometric shape) is formed in the ring and is configured for allowing the X-ray beam corresponding in actual size to more than one pixel point for an image to pass therethrough freely. The modulator 3 is made of an X-ray shielding material, such as lead, tungsten, copper, steel, lead oxide, tungsten oxide, or the like, with adequate thickness, or a mixture of some of them. The X-ray passing region 30 is formed in the circular ring of the modulator 3. The modulator 3 may rotate, and has its rotating axis perpendicular to a plane of the fan-beam.

The passing region 30 is a blank region opened in the shielding material and allowing the X-ray to pass therethrough freely and having a certain geometric shape. For example, the passing region 30 may consist of several slots 31 having certain lengths and uniform diameters, and a length-width ratio of each slot 31 is determined according to actual requirements and ranges from 2:1 to 50:1, its length direction is consistent with a linear speed direction of rotation of the ring; for another example, the passing region 30 may consist of several sets of apertures 32 closely adjacent to one another, and the number of each set of apertures 32 can range from 2 to 50, and an arrangement direction of the apertures 32 is consistent with the linear speed direction of rotation of the ring.

The fan-beam forms a ray beam flow with predefined certain shape, after passing through the collimator 2 and then through the passing region 30 of the modulator. When the modulator 3 rotates, the ray beam flow can change continuously spatially, that is, a spatial modulation is achieved.

Traditional "flying-spot" scanning is to form a spatially modulated beam flow of a "spot", while according to the present disclosure, a spatially modulated beam flow of a "line" is formed, and thus it is called "flying line" scanning.

Because several beam flows of "spot" are provided in the "flying-line" mode at a time, the output dosage in the "flying-line" mode is several times more than that in the "flying-spot" scanning mode, and the increase of dosage is helpful fundamentally to reduce random fluctuation of signal and to improve signal-to-noise ratio of the signal.

The detector 4 receives the X-ray, scattered by an object to be inspected and generates a scattering signal. For example, the detector 4 absorbs the ray, scattered by an object to be inspected, from the "flying-line" beam flow, and further converts it into a digital signal to be processed according to rotation angle of the modulator 3.

The electric motor 5 is configured to provide power, for example for driving the modulator 3 to rotate with a certain angular speed.

The controller 6 controls rotation of the modulator 3, and acquires angular information of the modulator 3 and the scattering signal of the detector 4. For example, the controller 6 directly controls the electric motor 5 to control angular speed of rotation, while acquiring angular information of the modulator 3 and the scattering signal of the detector 4.

Brief Description on Imaging Method

In the handheld backscatter imager 100 according to the present disclosure, the "flying-line" equals several "flying-spots" incident on the object to be inspected at the same time, accordingly, the manner in which scanning positions and scattering signals are in a simple one-to-one correspondence in the traditional "flying-spot" scanning mode does not apply in "flying-line" mode obviously. It is necessary to decompose actual signal of each position in signals. The imaging method is provided as follows:

> by means of the modulator, the X-ray beam corresponding in actual size to more than one pixel point is emitted, (in the traditional "flying-spot" scanning, a size of a pencil beam flow through a flying-spot modulation device is an actual size of one pixel point of an image);
> detector signals acquired at each time represent a sum of a plurality of pixel points of an image; by an imaging algorithm, value of each of the pixel points of the image is decomposed from the detector signals.

In the imaging method of the handheld backscatter imager 100 according to the present disclosure, a final scanning image is achieved by computing, according to the imaging algorithm, the angular information and the scattering signals acquired. For example, the imaging algorithm operates in the controller 6, and the final scanning image is achieved by computing, according to the successive differential algorithm, the angular information and the scattering signals acquired. Specifically, the controller 6 calculates, based on a successive differential algorithm, a difference value between a currently acquired scattering signal and a formerly acquired scattering signal; calculates, based on currently acquired angular information, spatially angular information of emission of a current X-ray beam, and determines a position of the pixel point, corresponding to the current X-ray beam and being in the imaging image, and a corresponding compensation value according to the spatially angular information; and determines, based on the difference value and the corresponding compensation value, a pixel point value at the position of the pixel point corresponding to the current X-ray beam; so as to obtain a final scanning image.

According to the handheld backscatter imager 100 and the imaging method of the handheld backscatter imager according to the present disclosure, the embodiments about configurations of the X-ray passing region 30 in the modulator 3 and the algorithms of values of the pixel points in the imaging method are presented as follows.

A Non-claimed Implementation

The X-ray passing region 30 in the modulator 3 is designed to have the configuration of a slot.

A length-width ratio of a collimating slit in the collimator 2 is n and a length-width ratio of the passing region 30 is m, $2 \leq m < n/2$ (when m = 1, it is a conventional flying-spot scanning mode with formation of a square hole), that is to say, the number of spots in each scanning line is n, a maximum spot number being covered by the flying-line is m, and i is the number of imaging pixel points corresponding to a single X-ray beam.

Once the modulator 3 rotates, signals acquired by the detector 3 are $S_1$, $S_2$, ......, $S_n$, started from when the slot 31 just enters a range of the collimating slit, and values of the pixel points for displaying in the final scanning image are $P_1$, $P_2$, ......, $P_n$, then, calculation formulas of the values of the pixel points are as follows:

$$\begin{cases} p_i = s_i - s_{i-1}, & i \leq m \\ p_i = s_i - s_{i-1} + p_{i-m}, & i > m \end{cases}$$

1st non-claimed implementation

The X-ray passing region 30 in the modulator 3 is designed to have a configuration of apertures.

A length-width ratio of a collimating slit in the collimator 2 is n, the passing region 30 is designed to have a long and narrow column of a series of apertures 32, wherein the number of the apertures is m (when m = 1, it is a conventional flying-spot scanning mode with formation of a circular hole), that is to say, the number of spots in each scanning line is n, a maximum spot number being covered by the flying-line is m, and i is the number of imaging pixel points corresponding to a single X-ray beam.

Once the modulator 3 rotates, signals acquired by the detector 3 are $S_1$, $S_2$, ......, $S_n$, started from when the apertures 32 just enter a range of the collimating slit, and values of the pixel points for displaying in the final scanning image are $P_1$, $P_2$, ......, $P_n$, then, calculation formulas of the values of the pixel points are as follows:

$$\begin{cases} p_i = s_i - s_{i-1}, & i \leq m \\ p_i = s_i - s_{i-1} + p_{i-m}, & i > m \end{cases}$$

2$^{nd}$ non-claimed implementation

The X-ray passing region 30 in the modulator 3 is designed to have another configuration of a slot.

A length-width ratio of a collimating slit in the collimator 2 is n, the passing region 30 is designed to have a slot 31, with a "short tail" slot 310 (that is, with a smaller diameter end 310) at its end in a counter-rotation direction, a length of the "short tail" slot 310 equals to a width of the slot 31 while a width of the "short tail" slot 310 is less than the width of the slot 31, with a ratio coefficient of $\alpha$ ($\alpha < 1$). A length-width ratio of the slot 31 together with the "short tail" slot 310 is m, $2 \leq m < n/2$, that is to say, the number of spots in each scanning line is n, a maximum spot number being covered by the flying-line is m, and i is the number of imaging pixel points corresponding to a single X-ray beam.

Once the modulator 3 rotates, signals acquired by the detector 3 are $S_1$, $S_2$, ......, $S_n$, started from when the slot 31 just enters a range of the collimating slit, and values of the pixel points for displaying in the final scanning image are $P_1$, $P_2$, ......, $P_n$, then, calculation formulas of the values of the pixel points are as follows:

$$\begin{cases} p_i = s_i - s_{i-1}, & i < m \\ p_i = s_i - s_{i-1} + \alpha \cdot p_{i-m+1}, & i = m \\ p_i = s_i - s_{i-1} + (1 - \alpha) \cdot p_{i-m+1} + \alpha \cdot p_{i-m}, & i > m \end{cases}$$

This configuration can rapidly reduce influence of former signals on later signals, achieving better image effect.

3$^{rd}$ non-claimed implementation

The X-ray passing region 30 in the modulator 3 is designed to have another configuration of apertures.

A length-width ratio of a collimating slit in the collimator 2 is n, the passing region 30 is designed to have a series of apertures 32 connected to one another and including a smaller-diameter aperture 320, wherein a diameter of the smaller-diameter aperture 320 is less than that of normal apertures 32, and a ratio coefficient of $\alpha$ ($\alpha < 1$). The total number of the long and narrow column of apertures 32 together with the smaller-diameter aperture 320 is m, $2 \leq m < n/2$, that is to say, the number of spots in each scanning line is n, a maximum spot number being covered by the flying-line is m, and i is the number of imaging pixel points corresponding to a single X-ray beam.

Once the modulator 3 rotates, signals acquired by the detector 3 are $S_1$, $S_2$, ......, $S_n$, started from when the column of apertures 32 just enters a range of the collimating slit, and values of the pixel points for displaying in a final scanning image are $P_1$, $P_2$, ......, $P_n$, then, calculation formulas of the values of the pixel points are as follows:

$$\begin{cases} p_i = s_i - s_{i-1}, & i < m \\ p_i = s_i - s_{i-1} + \alpha \cdot p_{i-m+1}, & i = m \\ p_i = s_i - s_{i-1} + (1 - \alpha) \cdot p_{i-m+1} + \alpha \cdot p_{i-m}, & i > m \end{cases}$$

This configuration can rapidly reduce influence of former signals on later signals, achieving better image effect.

Thus it can be seen from the above that, with the handheld backscatter imager and the imaging method of the handheld backscatter imager according to the present disclosure, by the "flying-line" scanning mode, the output dosage of the X-ray machine is greatly increased actually, while maintaining the scanning time unchanged. Because the object to be scanned is goods instead of a human being, a great output dosage will not cause a risk on radiation safety of the object to be inspected.

Meanwhile, the output dosage in the "flying-line" scanning mode is several times more than that in the "flying-spot" scanning mode, and the increase of dosage is helpful fundamentally to reduce random fluctuation of signal and to improve signal-to-noise ratio of the signal.

The above specific embodiments of the present disclosure merely exemplarily explain principles and advantages of the present disclosure, but not to limit the present disclosure. It would be appreciated by those skilled in the art that changes and modifications may be made on the present disclosure and the scope of the present invention is defined in the claims.

## Claims

1. A handheld backscatter imager, comprising:

   an X-ray source (1), configured for generating an X-ray;
   at least one collimator (2), configured for collimation of the X-ray, said collimator having a collimating slit and forming a fan beam;
   a modulator (3), said modulator having a circular ring shape, configured to surround the X-ray source and capable of rotating around the X-ray source, the modulator (3) being formed with at least one X-ray passing region (30) that allows an X-ray beam to pass therethrough, the rotating axis of said modulator being perpendicular to the plane of the fan beam;
   a detector (4), configured to receive a scattered X-ray, which is generated after the X-ray beam modulated by the modulator (3) is scattered by an object to be inspected, and to generate a corresponding scattering signal; and
   a controller (6), configured to acquire angular information of the modulator (3) and the scattering signal of the detector (4);
   **characterized in that** the at least one X-ray passing region (30) is designed to have a configuration of a long and narrow column of apertures (32), formed by a series of apertures connected to one another, to have a configuration of a long and narrow slot (31) with a smaller diameter end, or to have a configuration of a long and narrow column of apertures, formed by a series of apertures connected to one another and including a smaller-diameter aperture, wherein a longitudinal direction of the long and narrow column of apertures (32) or of the long and narrow slot (31) is consistent with a linear speed direction of rotation of the modulator (3).

2. The handheld backscatter imager of claim 1, **characterized in that**, the modulator (3) assumes a circular ring shape having a central axis of the X-ray source (1) as its axis, and the at least one X-ray passing region (30) is formed in a ring surface of the circular ring shape; and
   the at least one collimator (2) corresponds to the at least one X-ray passing region (30), the collimator (2) assumes a sector shape and is provided between the corresponding X-ray passing region (30) of the modulator (3) and the X-ray source (1), and the corresponding X-ray passing region (30) is designed to be perpendicular to a sector-shaped surface of the collimator (2).

3. A handheld backscatter imaging method, comprising:

   generating, by an X-ray source, an X-ray;
   collimating, by a collimator having a collimating slit and forming a fan beam, the X-ray;
   passing an X-ray beam through at least one X-ray passing region of a modulator having a circular ring shape, the modulator being configured to surround the X-ray source and be capable of rotating around the X-ray source, the modulator being formed with the at least one X-ray passing region, the rotating axis of said modulator being perpendicular to the plane of the fan beam;
   receiving, by a detector, a scattered X-ray, which is generated after the X-ray beam modulated by the modulator is scattered by an object to be inspected, and generating a corresponding scattering signal by the detector; and
   acquiring, by a controller, angular information of the modulator and the scattering signal of the detector;
   **characterized in that** the at least one X-ray passing region is designed to have a configuration of a long and narrow column of apertures, formed by a series of apertures connected to one another, to have a configuration of a long and narrow slot with a smaller diameter end, or to have a configuration of a long and narrow column of apertures, formed by a series of apertures connected to one another and including a smaller-diameter aperture, wherein a longitudinal direction of the long and narrow column of apertures (32) or of the long and narrow slot (31) is consistent with a linear speed direction of rotation of the modulator (3).

4. The imaging method of claim 3, **characterized in that**, the controller is further configured to control rotation of the modulator.

5. The imaging method of claim 4, **characterized in that**, the at least one X-ray passing region is designed to have a long and narrow slot configuration.

6. The imaging method of claim 4, **characterized in that**, the at least one X-ray passing region is designed to have a configuration of a long and narrow column of apertures, formed by a series of apertures connected to one another.

7. The imaging method of claim 4, **characterized in that**, the at least one X-ray passing region is designed to have a configuration of a long and narrow slot with a smaller diameter end.

8. The imaging method of claim 4, **characterized in that**, the at least one X-ray passing region is designed to have a configuration of a long and narrow column of apertures, formed by a series of apertures connected to one another and including a smaller-diameter aperture.

**Patentansprüche**

1. Tragbarer Rückstreuungsbildgeber, umfassend:

eine Röntgenstrahlquelle (1), die dazu ausgestaltet ist, einen Röntgenstrahl zu erzeugen,
mindestens einen Kollimator (2), der zur Kollimation des Röntgenstrahls ausgestaltet ist, wobei der Kollimator einen Kollimationsspalt aufweist und einen Fächerstrahl bildet,
einen Modulator (3), wobei der Modulator eine kreisförmige Ringform aufweist, dazu ausgestaltet ist, die Röntgenstrahlquelle zu umgeben, und in der Lage ist, sich um die Röntgenstrahlquelle zu drehen, wobei der Modulator (3) mit mindestens einer Röntgenstrahl-Durchlassregion (30) gebildet ist, die es einem Röntgenstrahl ermöglicht, sie zu durchqueren, wobei die Drehachse des Modulators senkrecht zu der Ebene des Fächerstrahls ist,
einen Detektor (4), der dazu ausgestaltet ist, einen gestreuten Röntgenstrahl zu empfangen, der erzeugt wird, nachdem der durch den Modulator (3) modulierte Röntgenstrahl durch ein zu untersuchendes Objekt gestreut wurde, und ein entsprechendes Streusignal zu erzeugen, und
eine Steuereinrichtung (6), die dazu ausgestaltet ist, Winkelinformationen des Modulators (3) und das Streusignal des Detektors (4) zu erfassen,
**dadurch gekennzeichnet, dass** die mindestens eine Röntgenstrahl-Durchlassregion (30) dazu konstruiert ist, eine Ausgestaltung einer langen und schmalen Säule von Öffnungen (32) aufzuweisen, die durch eine Reihe von Öffnungen gebildet ist, die miteinander verbunden sind, eine Ausgestaltung eines langen und schmalen Schlitzes (31) mit einem Ende mit kleinerem Durchmesser aufzuweisen, oder eine Ausgestaltung einer langen und schmalen Säule von Öffnungen aufzuweisen, die durch eine Reihe von Öffnungen gebildet ist, die miteinander verbunden sind und eine Öffnung mit kleinerem Durchmesser einschließen, wobei eine Längsrichtung der langen und schmalen Säule von Öffnungen (32) oder des langen und schmalen Schlitzes (31) mit einer linearen Drehzahlrichtung des Modulators (3) übereinstimmt.

2. Tragbarer Rückstreuungsbildgeber nach Anspruch 1,
**dadurch gekennzeichnet, dass**
der Modulator (3) eine kreisförmige Ringform annimmt, die eine Mittelachse der Röntgenstrahlquelle (1) als seine Achse aufweist, und die mindestens eine Röntgenstrahl-Durchlassregion (30) in einer Ringoberfläche der kreisförmigen Ringform gebildet ist, und
der mindestens eine Kollimator (2) der mindestens einen Röntgenstrahl-Durchlassregion (30) entspricht, wobei der Kollimator (2) eine Sektorform annimmt und zwischen der entsprechenden Röntgenstrahl-Durchlassregion (30) des Modulators (3) und der Röntgenstrahlquelle (1) bereitgestellt ist, und die entsprechende Röntgenstrahl-Durchlassregion (30) dazu konstruiert ist, senkrecht zu einer sektorförmigen Oberfläche des Kollimators (2) zu sein.

3. Tragbares Rückstreuungsbildgebungsverfahren, umfassend:

Erzeugen eines Röntgenstrahls durch eine Röntgenstrahlquelle,
Kollimieren des Röntgenstrahls durch einen Kollimator, der einen Kollimationsspalt aufweist und einen Fächerstrahl bildet,
Durchlassen eines Röntgenstrahls durch mindestens eine Röntgenstrahl-Durchlassregion eines Modulators, der eine kreisförmige Ringform aufweist, wobei der Modulator dazu ausgestaltet ist, die Röntgenstrahlquelle zu umgeben und in der Lage zu sein, sich um die Röntgenstrahlquelle zu drehen, wobei der Modulator mit der mindestens einen Röntgenstrahl-Durchlassregion gebildet ist, wobei die Drehachse des Modulators senkrecht zu der Ebene des Fächerstrahls ist,

durch einen Detektor, Empfangen eines gestreuten Röntgenstrahls, der erzeugt wird, nachdem der durch den Modulator modulierte Röntgenstrahl durch ein zu untersuchendes Objekt gestreut wurde, und Erzeugen eines entsprechenden Streusignals durch den Detektor, und

durch eine Steuereinrichtung, Erfassen von Winkelinformationen des Modulators und des Streusignals des Detektors,

**dadurch gekennzeichnet, dass** die mindestens eine Röntgenstrahl-Durchlassregion dazu konstruiert ist, eine Ausgestaltung einer langen und schmalen Säule von Öffnungen aufzuweisen, die durch eine Reihe von Öffnungen gebildet ist, die miteinander verbunden sind, eine Ausgestaltung eines langen und schmalen Schlitzes mit einem Ende mit kleinerem Durchmesser aufzuweisen, oder eine Ausgestaltung einer langen und schmalen Säule von Öffnungen aufzuweisen, die durch eine Reihe von Öffnungen gebildet ist, die miteinander verbunden sind und eine Öffnung mit kleinerem Durchmesser einschließen, wobei eine Längsrichtung der langen und schmalen Säule von Öffnungen (32) oder des langen und schmalen Schlitzes (31) mit einer linearen Drehzahlrichtung des Modulators (3) übereinstimmt.

4. Bildgebungsverfahren nach Anspruch 3, **dadurch gekennzeichnet, dass** die Steuereinrichtung ferner dazu ausgestaltet ist, die Drehung des Modulators zu steuern.

5. Bildgebungsverfahren nach Anspruch 4, **dadurch gekennzeichnet, dass** die mindestens eine Röntgenstrahl-Durchlassregion dazu konstruiert ist, eine Ausgestaltung eines langen und schmalen Schlitzes aufzuweisen.

6. Bildgebungsverfahren nach Anspruch 4, **dadurch gekennzeichnet, dass** die mindestens eine Röntgenstrahl-Durchlassregion dazu konstruiert ist, eine Ausgestaltung einer langen und schmalen Säule von Öffnungen aufzuweisen, die durch eine Reihe von Öffnungen gebildet ist, die miteinander verbunden sind.

7. Bildgebungsverfahren nach Anspruch 4, **dadurch gekennzeichnet, dass** die mindestens eine Röntgenstrahl-Durchlassregion dazu konstruiert ist, eine Ausgestaltung eines langen und schmalen Schlitzes mit einem Ende mit kleinerem Durchmesser aufzuweisen.

8. Bildgebungsverfahren nach Anspruch 4, **dadurch gekennzeichnet, dass** die mindestens eine Röntgenstrahl-Durchlassregion dazu konstruiert ist, eine Ausgestaltung einer langen und schmalen Säule von Öffnungen aufzuweisen, die durch eine Reihe von Öffnungen gebildet ist, die miteinander verbunden sind und eine Öffnung mit kleinerem Durchmesser einschließen.

## Revendications

1. Imageur à rétrodiffusion portatif comprenant :

une source de rayon X (1) configurée pour générer un rayon X ;

au moins un collimateur (2) configuré pour la collimation du rayon X, ledit collimateur ayant une fente de collimation et formant un faisceau en éventail ;

un modulateur (3), ledit modulateur ayant une forme annulaire circulaire, configuré pour entourer la source de rayon X et pouvant tourner autour de la source de rayon X, le modulateur (3) étant formé avec au moins une région de passage de rayon X (30) qui permet à un faisceau de rayon X de passer à travers cette dernière, l'axe de rotation dudit modulateur étant perpendiculaire au plan du faisceau en éventail ;

un détecteur (4) configuré pour recevoir un rayon X diffusé, qui est généré après que le faisceau de rayon X modulé par le modulateur (3) a été diffusé par un objet à contrôler, et pour générer un signal de diffusion correspondant ; et

un organe de commande (6) configuré pour acquérir l'information angulaire du modulateur (3) et le signal de diffusion du détecteur (4) ;

**caractérisé en ce que** la au moins une région de passage de rayon X (30) est conçue pour avoir une configuration d'une colonne longue et étroite d'ouvertures (32), formée par une série d'ouvertures raccordées entre elles, pour avoir une configuration d'une fente longue et étroite (31) avec une extrémité de diamètre plus petit, ou bien pour avoir une configuration d'une colonne longue et étroite d'ouvertures, formée par une série d'ouvertures raccordées entre elles et comprenant une ouverture de plus petit diamètre, dans lequel une direction longitudinale de la colonne longue et étroite d'ouvertures (32) ou de la fente longue et étroite (31) est compatible avec une direction de rotation de vitesse linéaire du modulateur (3).

**2.** Imageur à rétrodiffusion portatif selon la revendication 1, **caractérisé en ce que** :

le modulateur (3) adopte une forme annulaire circulaire ayant un axe central de la source de rayon X (1) au titre de son axe, et la au moins une région de passage de rayon X (30) est formée dans une surface annulaire de la forme annulaire circulaire ; et
le au moins un collimateur (2) correspond à la au moins une région de passage de rayon X (30), le collimateur (2) adopte une forme de secteur et est prévu entre la région de passage de rayon X (30) correspondante du modulateur (3) et la source de rayon X (1), et la région de passage de rayon X (30) correspondante est conçue pour être perpendiculaire à une surface en forme de secteur du collimateur (2).

**3.** Procédé d'imagerie à rétrodiffusion portatif comprenant les étapes suivantes :

générer, par une source de rayon X, un rayon X ;
collimater, par un collimateur ayant une fente de collimation et formant un faisceau en éventail, le rayon X ;
faire passer un faisceau de rayon X à travers la au moins une région de passage de rayon X d'un modulateur ayant une forme annulaire circulaire, le modulateur étant configuré pour entourer la source de rayon X et être capable de tourner autour de la source de rayon X, le modulateur étant formé avec la au moins une région de passage de rayon X, l'axe de rotation dudit modulateur étant perpendiculaire au plan du faisceau en éventail ;
recevoir, par un détecteur, un rayon X diffusé, qui est généré après que le faisceau de rayon X modulé par le modulateur, a été diffusé par un objet à contrôler, et générer un signal de diffusion correspondant par le détecteur ; et
acquérir, grâce à un organe de commande, l'information angulaire du modulateur et le signal de diffusion du détecteur ;
**caractérisé en ce que** la au moins une région de passage de rayon X est conçue pour avoir une configuration d'une colonne longue et étroite d'ouvertures, formée par une série d'ouvertures raccordées entre elles, pour avoir une configuration d'une fente longue et étroite avec une extrémité de plus petit diamètre, ou bien pour avoir une configuration d'une colonne longue et étroite d'ouvertures, formée par une série d'ouvertures raccordées entre elles et comprenant une ouverture de plus petit diamètre, dans lequel une direction longitudinale de la colonne longue et étroite d'ouvertures (32) ou de la fente longue et étroite (31) est compatible avec une direction de rotation de vitesse linéaire du modulateur (3).

**4.** Procédé d'imagerie selon la revendication 3, **caractérisé en ce que** l'organe de commande est en outre configuré pour commander la rotation du modulateur.

**5.** Procédé d'imagerie selon la revendication 4, **caractérisé en ce que** la au moins une région de passage de rayon X est conçue pour avoir une configuration de fente longue et étroite.

**6.** Procédé d'imagerie selon la revendication 4, **caractérisé en ce que** la au moins une région de passage de rayon X est conçue pour avoir une configuration d'une colonne longue et étroite d'ouvertures, formée par une série d'ouvertures raccordée entre elles.

**7.** Procédé d'imagerie selon la revendication 4, **caractérisé en ce que** la au moins une région de passage de rayon X est conçue pour avoir une configuration d'une fente longue et étroite avec une extrémité de plus petit diamètre.

**8.** Procédé d'imagerie selon la revendication 4, **caractérisé en ce que** la au moins une région de passage de rayon X est conçue pour avoir une configuration d'une colonne longue et étroite d'ouvertures, formée par une série d'ouvertures raccordées entre elles et comprenant une ouverture de plus petit diamètre.

100

Fig. 1

Fig. 2

Fig. 3

Fig. 4a

Fig. 4b

310

31

Fig. 4c

320

32

Fig. 4d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015346120 A1
- US 2013195248 A1

- CN 103901064 A